# EUROPÄISCHE PATENTANMELDUNG

(11) **EP 4 841 122 A1**
(43) Veröffentlichungstag der Anmeldung: **18.11.2026**
(21) Anmeldenummer: 26177265.1
(22) Anmeldetag: 07.05.2026
(51) Int. Cl.: F16B 37/00

(54) **SCHRAUBENAUFNAHME UND KUNSTSTOFFDÜBEL**

(30) Priorität: 13.05.2025 DE 102025118356
(71) Anmelder: Adolf Würth GmbH & Co. KG, 74653 Künzelsau (DE)
(72) Erfinder: YIMGA, Junior Ekue, 74653 Künzelsau (DE)
(74) Vertreter: Patentanwälte Ruff, Wilhelm, Beier, Dauster & Partner mbB

(57) **Zusammenfassung**

Die Erfindung betrifft eine Schraubenaufnahme mit einem Schraubenkanal, dessen Innenwandung wenigstens abschnittsweise mit einem Maschinengewinde versehen ist, um das Eindrehen und Verankern von Maschinenschrauben in dem Schraubenkanal zu ermöglichen, wobei die Innenwandung mit wenigstens drei, insbesondere vier, radial nach innen vorragenden und über den Umfang der Innenwandung verteilten Vorsprüngen versehen ist, wobei die radial innen liegenden Enden der Vorsprünge radial innerhalb einer durch das Maschinengewinde definierten Maschinengewindeinnenkontur angeordnet sind.

## Beschreibung

Die Erfindung betrifft eine Schraubenaufnahme mit einem Schraubenkanal, dessen Innenwandung wenigstens abschnittsweise mit einem Maschinengewinde versehen ist, um das Eindrehen und Verankern von Maschinenschrauben in dem Schraubenkanal zu ermöglichen. Die Erfindung betrifft auch einen Kunststoffdübel.

Mit der Erfindung sollen eine Schraubenaufnahme und ein Kunststoffdübel hinsichtlich eines flexiblen Einsatzes verbessert werden.

Erfindungsgemäß ist hierzu eine Schraubenaufnahme mit einem Schraubenkanal vorgesehen, dessen Innenwandung wenigstens abschnittsweise mit einem Maschinengewinde versehen ist, um das Eindrehen und Verankern von Maschinenschrauben in dem Schraubenkanal zu ermöglichen, bei der die Innenwandung mit wenigstens drei, insbesondere vier, radial nach innen vorragenden und über den Umfang der Innenwandung verteilten Vorsprüngen versehen ist, wobei die radial innen liegenden Enden der Vorsprünge radial innerhalb einer durch das Maschinengewinde definierten Maschinengewindeinnenkontur angeordnet sind.

Der Erfindung liegt die Erkenntnis zugrunde, dass ein Schraubenkanal, der mit einem Maschinengewinde versehen und damit zum Eindrehen von Maschinenschrauben vorgesehen ist, alternativ auch für das Eindrehen von Holzschrauben, Spanplattenschrauben, Blechschrauben oder dergleichen eingesetzt werden kann, wenn der Schraubenkanal mit nach innen vorragenden und über den Umfang der Innenwandung verteilten Vorsprüngen versehen ist. Schrauben mit einem anderen Gewinde als Maschinenschrauben, die darüber hinaus einen etwas kleineren Außendurchmesser aufweisen als die Maschinenschrauben, können dann mit ihrem Gewinde an den über den Umfang der Innenwandung verteilten Vorsprüngen angreifen. Dadurch können nicht nur Maschinenschrauben, sondern beispielsweise auch Schrauben mit Holzgewinde oder Schrauben mit Blechgewinde, in die Schraubenaufnahme eingedreht werden. Beim Eindrehen einer Maschinenschraube werden die radial innerhalb einer durch das Maschinengewinde definierten Maschinengewindeinnenkontur liegenden Vorsprünge radial nach außen verdrängt. Dies geschieht durch das einfache Eindrehen der Maschinenschraube und kann beispielsweise durch plastische Verformung der Vorsprünge, durch Wegdrücken der Vorsprünge in radialer Richtung gegen eine Federwirkung oder durch eine Kombination aus plastischer Verformung und radialem Wegdrücken der Vorsprünge erfolgen.

Durch die Erfindung wird infolgedessen eine Schraubenaufnahme bereitgestellt, die flexibel sowohl für Schrauben mit Maschinengewinde als auch für Schrauben mit einem vom Maschinengewinde abweichenden Gewinde, beispielsweise ein Holzgewinde oder ein Blechgewinde, eingesetzt werden kann. Gerade auf Baustellen wird dadurch die erforderliche Lagerhaltung erheblich vereinfacht. Auch die Produktionskosten von solchen Schraubenaufnahmen können durch sehr hohe Stückzahlen deutlich verringert werden.

In Weiterbildung der Erfindung sind die Vorsprünge innerhalb von Ausnehmungen im Schraubengewinde angeordnet.

Auf diese Weise wird Raum dafür geschaffen, dass die Vorsprünge beim Eindrehen einer Maschinenschraube radial nach außen in die Ausnehmungen des Schraubengewindes verdrängt werden. Wie ausgeführt wurde, können die Vorsprünge dabei beim Eindrehen der Maschinenschraube plastisch verformt und die Ausnehmungen hineingedrückt werden oder beim Einschrauben der Maschinenschraube werden die Vorsprünge gegen die Wirkung einer Feder radial nach außen gedrückt. Eine Kombination dieser beiden Wirkmechanismen ist möglich.

In Weiterbildung der Erfindung sind in Umfangsrichtung die Ausnehmungen breiter als die Vorsprünge und/oder in Längsrichtung sind die Ausnehmungen länger sind als die Vorsprünge.

Auf diese Weise wird ausreichend Platz zum plastischen Verformen und Verdrängen des Materials der Vorsprünge radial nach außen und teilweise auch in und entgegen der Umfangsrichtung sowie in und entgegen der Längsrichtung und in die Ausnehmungen hinein beim Eindrehen einer Maschinenschraube geschaffen.

In Weiterbildung der Erfindung sind die Vorsprünge in Form einer im Querschnitt dreieckigen Profilleiste ausgebildet, wobei eine Dachkante der Profilleiste radial innen liegt und sich die Profilleiste in einer Richtung radial nach außen verbreitert.

Auf diese Weise kann, beispielsweise beim Eindrehen einer Holzschraube, ein Gewinde mittels der Holzschraube problemlos in die Profilleiste eingeformt werden. Ein Anpacken der Schraube mit niedrigem Einschraubmoment wird dabei durch die im Querschnitt dreieckige Profilleiste begünstigt.

In Weiterbildung der Erfindung sind in Einschraubrichtung vorne und/oder hinten liegende Kanten der Vorsprünge abgeschrägt.

Auf diese Weise kann das Ansetzen einer Schraube mit einem vom Maschinengewinde abweichenden Gewinde erleichtert werden.

In Weiterbildung der Erfindung sind die Vorsprünge mit einem Abschnitt eines Innengewindes, insbesondere für eine Holzschraube oder Blechschraube, oder mit einer Verzahnung versehen.

Auf diese Weise kann die Schraubenaufnahme sogar für Maschinenschrauben mit unterschiedlichem Durchmesser eingesetzt werden, wenn der Abschnitt des Innengewindes auf den Vorsprüngen einem Maschinengewinde mit kleinerem Durchmesser als das Maschinengewinde an der Innenwandung des Schraubenkanals ausgebildet ist. Beispielsweise kann das Innengewinde auf den Vorsprüngen auch für eine Holzschraube oder Blechschraube vorgesehen sein. Alternativ können die Vorsprünge auch einfach mit einer Verzahnung versehen sein und beim Eindrehen einer Schraube wird dadurch das Einformen eines Gewindes in die Vorsprünge erleichtert.

In Weiterbildung der Erfindung sind die Vorsprünge zum Einfurchen eines Gewindes, insbesondere beim Eindrehen einer Holzschraube oder Blechschraube, in den Schraubenkanal, ausgebildet.

Auf diese Weise muss die eingedrehte Schraube zwar von ihrem Durchmesser her zu dem Schraubenkanal und vor allem den Vorsprüngen im Schraubenkanal passen, ein Gewinde, das die Schraube in die Vorsprünge einformt, kann aber frei gewählt werden. Dadurch ist die erfindungsgemäße Schraubenaufnahme äußerst flexibel einsetzbar.

In Weiterbildung der Erfindung sind die Vorsprünge aus plastisch verformbarem Material, insbesondere Kunststoff, gebildet.

Beispielsweise sind die Vorsprünge aus einem Kunststoffmaterial gebildet, das auch für konventionelle Kunststoffdübel verwendet wird. Auch das Maschinengewinde kann aus demselben Material ausgebildet sein. Kunststoff, der üblicherweise für Kunststoffdübel verwendet wird, ist plastisch verformbar und in besonderer Weise für das Einformen eines Gewindes ausgebildet. Dennoch ist dieser Kunststoff ausreichend formstabil, um einer Maschinenschraube in einem vorbereiteten Maschinengewinde an der Innenwandung des Schraubenkanals sicheren Halt zu geben.

In Weiterbildung der Erfindung ist das Maschinengewinde durch mindestens drei gleichmäßig um den Umfang des Maschinengewindes verteilten, insbesondere in Längsrichtung durchlaufenden, Nuten unterbrochen, wobei die Vorsprünge im Bereich der Nuten angeordnet sind.

Die Nuten schaffen Raum für das Material der Vorsprünge oder die Vorsprünge, wenn die Vorsprünge beim Eindrehen einer zum Maschinengewinde im Schraubenkanal passenden Maschinenschraube radial nach außen verdrängt werden, sei es durch plastische Verformung oder durch Verdrängen radial nach außen gegen die Wirkung einer Feder.

In Weiterbildung der Erfindung bestehen die Vorsprünge aus Vollmaterial und sind mit ihrer jeweiligen Basis mit einem Grundkörper der Schraubenaufnahme verbunden.

Auf diese Weise können die Vorsprünge in besonders stabiler Weise an den Grundkörper der Schraubenaufnahme angebunden werden und können auch hohen Auszugskräften widerstehen.

In Weiterbildung der Erfindung sind die Vorsprünge federbelastet und radial nach innen vorgespannt.

Beispielsweise können die Vorsprünge mittels einer Ringfeder, oder einer Blattfeder, radial nach innen vorgespannt sein. Die Vorsprünge können beispielsweise auch einstückig mit dem Grundkörper ausgeführt sein, beispielsweise angespritzt sein, und es kann ein federndes Verbindungselement zwischen Grundkörper und Vorsprung vorgesehen sein, beispielsweise eine einstückig angespritzte Blattfeder.

In Weiterbildung der Erfindung sind in Einschraubrichtung des Maschinengewindes gesehen mehrere radial nach innen vorragende Vorsprünge hintereinander angeordnet.

Auf diese Weise kann mittels der Vorsprünge eine hohe Auszugskraft einer Schraube erzielt werden, die mit einem Gewinde versehen ist, das von dem Maschinengewinde des Schraubenkanals in Steigung und/oder Durchmesser abweicht. Gleichzeitig kann das Einschraubmoment niedrig gehalten werden. Denn das Einschraubmoment wird ansteigen, wenn die Schraube ein Gewinde in eine erste Serie von Vorsprüngen einformt, die in Längsrichtung auf gleicher Höhe angeformt sind. Sobald das Gewinde in diese Vorsprünge eingeformt ist, sinkt das Einschraubmoment wieder ab und steigt erst wieder an, wenn dann ein Gewinde in eine zweite, in Längsrichtung nachfolgende Serie von Vorsprüngen eingeformt wird.

**In** Weiterbildung der Erfindung beträgt ein Abstand zwischen in Einschraubrichtung aufeinanderfolgenden Vorsprüngen das 0,25- bis 0,75-fache, insbesondere das 0,4-fache bis 0,6-fache, insbesondere das 0,5-fache, des Nenndurchmessers des Maschinengewindes.

Beispielsweise ist die Schraubenaufnahme mit einem Innengewinde M8 versehen. Ein Abstand zwischen der Mitte von in Längsrichtung des Schraubenkanals aufeinanderfolgenden Vorsprüngen beträgt dann 4 mm.

Die der Erfindung zugrunde liegende Aufgabe wird auch durch einen Kunststoffdübel mit einer erfindungsgemäßen Schraubenaufnahme gelöst.

Dadurch wird es möglich, einen Kunststoffdübel sowohl für Maschinenschrauben als auch für Schrauben mit Holzgewinde, Spanplattengewinde oder Blechgewinde einzusetzen. Beispielsweise wird es auch möglich, den Kunststoffdübel für Maschinenschrauben mit unterschiedlichem Durchmesser einzusetzen. Der Kunststoffdübel kann dadurch in äußerst flexibler Weise eingesetzt werden. Der Kunststoffdübel ist auf seiner Außenseite dabei beispielsweise wie ein konventioneller Kunststoffdübel mit Spreizvorrichtungen versehen.

In Weiterbildung der Erfindung ist eine Außenseite des Kunststoffdübels mit Spreizelementen versehen.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und/oder beschriebenen Ausführungsformen können dabei in beliebiger Weise miteinander kombiniert werden, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind. In den Zeichnungen zeigen:
- Fig. 1: eine teilweise transparent dargestellte, isometrische Ansicht einer Schraubenaufnahme gemäß einer ersten Ausführungsform der Erfindung,
- Fig. 2: eine Vorderansicht der Schraubenaufnahme der Fig. 1,
- Fig. 3: eine Ansicht auf die Schnittebene A-A in Fig. 2,
- Fig. 4: eine teilweise transparent dargestellte, isometrische Darstellung einer Schraubenaufnahme gemäß einer zweiten Ausführungsform der Erfindung,
- Fig. 5: eine Vorderansicht der Schraubenaufnahme der Fig. 4,
- Fig. 6: eine Ansicht auf die Schnittebene A-A in Fig. 5,
- Fig. 7: eine teilweise transparent dargestellte, isometrische Ansicht einer Schraubenaufnahme gemäß einer dritten Ausführungsform der Erfindung,
- Fig. 8: eine Vorderansicht der Schraubenaufnahme der Fig. 7,
- Fig. 9: eine Ansicht auf den Schnittverlauf A-A in Fig. 8,
- Fig. 10: eine schematische Schnittansicht einer Anordnung mit einer erfindungsgemäßen Schraubenaufnahme ähnlich der Fig. 4 bis 6, in die eine Schraube eingedreht ist und die in einer Gipskartonplatte angeordnet ist,
- Fig. 11: eine isometrische Ansicht einer weiteren Anordnung mit zwei erfindungsgemäßen Schraubenaufnahmen, einer Gipskartonplatte und zwei an der Gipskartonplatte befestigten Bauteilen,
- Fig. 12: eine Seitenansicht der Anordnung der Fig. 11 und
- Fig. 13: eine Ansicht auf die Schnittebene A-A in Fig. 12.

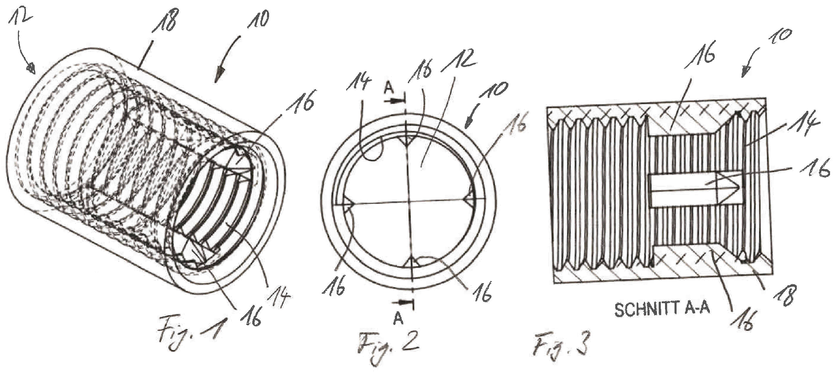

Fig. 1 zeigt eine erfindungsgemäße Schraubenaufnahme 10 gemäß einer ersten Ausführungsform der Erfindung. Die Schraubenaufnahme 10 ist als kreiszylindrische Buchse aus Kunststoff ausgebildet und weist einen Schraubenkanal 12 auf, der die Schraubenaufnahme 10 durchsetzt. Die Innenwandung des Schraubenkanals 12 ist abschnittsweise mit einem Maschinengewinde 14 versehen. Das Maschinengewinde 14 ist beispielsweise als M8-Innengewinde ausgeführt.

Die Innenwandung des Schraubenkanals 12 ist mit insgesamt vier radial nach innen vorragenden und gleichmäßig über den Umfang der Innenwandung verteilten Vorsprüngen 16 versehen, vgl. auch Fig. 2. In der Ansicht der Fig. 1 sind lediglich zwei der Vorsprünge 16 zu erkennen. Im Bereich der Vorsprünge 16 ist das Maschinengewinde 14 unterbrochen. Das Maschinengewinde 14 ist im Bereich der Vorsprünge 16 durch eine Nut unterbrochen, vgl. Fig. 3, wobei in jeder Nut ein Vorsprung 16 angeordnet ist.

Die Vorsprünge 16 sind einstückig mit dem Grundkörper 18 der Schraubenaufnahme 10 ausgebildet und beispielsweise ist die gesamte Schraubenaufnahme 10 als Kunststoffspritzgussteil ausgeführt. Die Schraubenaufnahme kann die Innenseite eines Kunststoffdübels bilden.

Fig. 2 zeigt eine Vorderansicht der Schraubenaufnahme 10. Gut zu erkennen ist der Schraubenkanal 12 mit dem als Maschinengewinde 14 ausgebildeten Innengewinde. In Fig. 2 ist auch gut zu erkennen, dass insgesamt vier Vorsprünge 16 vorgesehen sind und dass diese Vorsprünge 16 radial nach innen vorragen und die radial innen liegenden Enden der Vorsprünge radial innerhalb einer durch das Maschinengewinde 14 definierten Maschinengewindeinnenkontur angeordnet sind. In Längsrichtung des Schraubenkanals 12 gesehen sind die Vorsprünge dreieckförmig ausgebildet. Es sind insgesamt vier Vorsprünge 16 vorgesehen, die im Abstand von 90° über den Innenumfang des Schraubenkanals 12 verteilt sind.

Fig. 3 zeigt eine Ansicht auf die Schnittebene A-A in Fig. 2. In dieser Schnittansicht ist zu erkennen, dass die Vorsprünge 16 einstückig mit dem Grundkörper 18 der Schraubenaufnahme 10 ausgebildet sind. Es ist auch zu erkennen, dass die Vorsprünge an dem in Fig. 3 rechts gelegenen Ende abgeschrägt sind. Die Schraubenaufnahme 10 ist dafür vorgesehen, dass Schrauben von der in Fig. 3 rechten Seite her eingeschraubt werden. Das abgeschrägte Ende der Vorsprünge 16 erleichtert dadurch das Einschrauben von Schrauben in die Schraubenaufnahme 10.

Wenn eine Maschinenschraube in das Maschinengewinde 14 eingeschraubt werden soll und diese Maschinenschraube passend zum Maschinengewinde 14 ausgebildet ist, bei der dargestellten Schraubenaufnahme 10 also beispielsweise eine M8-Maschinenschraube, dann wird diese M8-Schraube in Fig. 3 von rechts her in das Maschinengewinde 14 eingeschraubt. Nach etwas mehr als einem Gewindegang, also etwas mehr als einer Umdrehung, wird das vordere Ende der Schraube auf das abgeschrägte Ende der Vorsprünge 16 treffen. Die Vorsprünge 16 bestehen, wie die vollständige Schraubenaufnahme 10, aus plastisch verformbarem Kunststoffmaterial. Wird die Maschinenschraube weiter in das Maschinengewinde 14 eingeschraubt, so werden die Vorsprünge 16 plastisch verformt und radial nach außen verdrängt. Da das Maschinengewinde 14 im Bereich der Vorsprünge 16 unterbrochen ist, vgl. Fig. 1, und die Vorsprünge 16 in Nuten angeordnet sind, steht genügend Raum zur Verfügung, um das Material der im Querschnitt dreieckförmigen Vorsprünge 16 radial nach außen und gegebenenfalls in Umfangsrichtung zu verdrängen, wenn eine zum Maschinengewinde 14 passende M8-Schraube in die Schraubenaufnahme 10 eingeschraubt wird. Das Einschraubmoment steigt dann, wenn während des Einschraubens die Vorsprünge 16 plastisch verformt und verdrängt werden, selbstverständlich an. Die M8-Schraube oder allgemein eine zum Maschinengewinde 14 passende Maschinenschraube kann aber problemlos in die Schraubenaufnahme 10 eingeschraubt werden.

Soll dahingegen ausgehend vom Zustand der Schraubenaufnahme 10 gemäß den Fig. 1 bis 3 eine Schraube in die Schraubenaufnahme 10 eingeschraubt werden, die kein M8-Maschinengewinde aufweist, allgemein also kein Gewinde hat, das passend zu dem Maschinengewinde 14 ausgebildet ist, so ist dies dadurch möglich, dass die Schraube, beispielsweise eine Holzschraube oder Blechschraube, die Vorsprünge 16 plastisch verformt, indem ein Gewinde in die Vorsprünge 16 eingeformt wird. Die Schraube mit abweichendem Gewinde, beispielsweise eine Holzschraube oder Blechschraube, muss hierzu einen Außendurchmesser haben, der wenigstens geringfügig kleiner ist als der Innendurchmesser des Maschinengewindes 14. Die Schraube wird ebenfalls in Fig. 3 von rechts her eingeschraubt und stößt zunächst auf die abgeschrägten Enden der Vorsprünge 16. Mit noch geringem Einschraubmoment kann die Schraube dann in die Schraubenaufnahme 10 eingeschraubt werden und gleichzeitig ein Gewinde in den Vorsprüngen 16 einformen. Dadurch können auch Schrauben mit einem Gewinde, das von dem Maschinengewinde 14 abweicht, problemlos in die Schraubenaufnahme 10 eingeschraubt und dort sicher verankert werden.

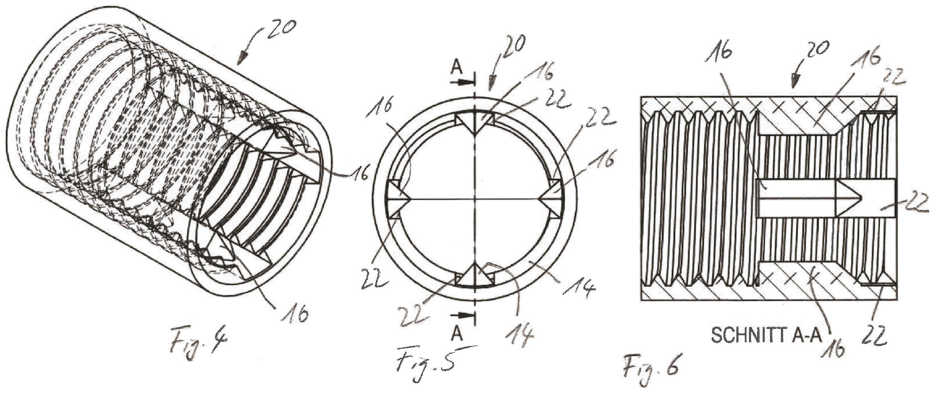

Fig. 4 zeigt eine abschnittsweise transparent dargestellte isometrische Ansicht einer Schraubenaufnahme 20 gemäß einer zweiten Ausführungsform der Erfindung. Die Schraubenaufnahme 20 ist weitgehend gleich aufgebaut wie die Schraubenaufnahme 10 der Fig. 1 bis 3, so dass nur die zur Schraubenaufnahme 10 unterschiedlichen Merkmale nachstehend erläutert werden.

Bei der Schraubenaufnahme 20 sind ebenfalls vier Vorsprünge 16 mit dreieckförmigem Querschnitt an der Innenwandung angeordnet. Wie Fig. 5 zu entnehmen ist, ragen diese Vorsprünge 16 ebenfalls in radialer Richtung nach innen über die durch das Maschinengewinde 14 definierte Innenkontur vor.

Fig. 5 und die Schnittansicht auf die Schnittebene A-A in Fig. 5, die in Fig. 6 dargestellt ist, lassen erkennen, dass die Nuten 22, die das Maschinengewinde 14 unterbrechen, länger ausgebildet sind als die entsprechenden Nuten bei der Schraubenaufnahme 10 der Fig. 1 bis 3. Die Nuten 22 erstrecken sich von dem in Fig. 6 rechts dargestellten Ende der Schraubenaufnahme 20 bis zu dem in Fig. 6 links gelegenen Ende der Vorsprünge 16. Wie bereits anhand der Fig. 1 bis 3 erläutert wurde, sind die Vorsprünge 16 in den Nuten 22 angeordnet. Indem sich die Nuten 22 bis zum Ende der Schraubenaufnahme 20 erstrecken, von dem ausgehend eine Schraube in die Schraubenaufnahme 20 eingeschraubt wird, steht mehr Raum zur Verfügung, um gegebenenfalls das Material der Vorsprünge 16 zu verdrängen.

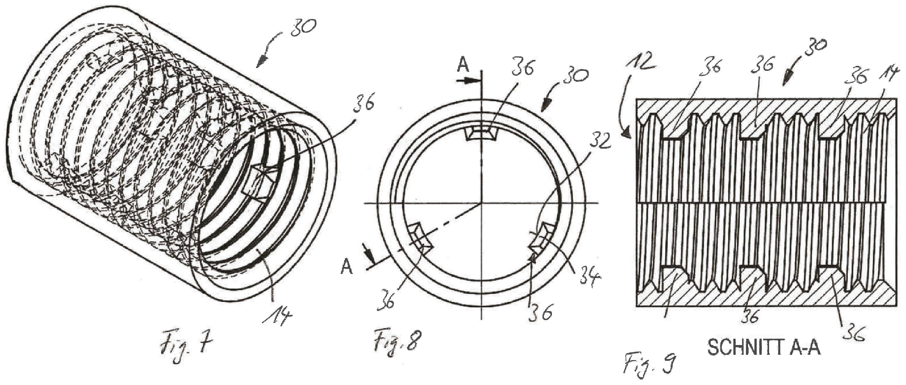

Fig. 7 zeigt eine abschnittsweise transparent dargestellte isometrische Ansicht einer Schraubenaufnahme 30 gemäß einer dritten Ausführungsform der Erfindung. Die Schraubenaufnahme 30 ist weitgehend gleich aufgebaut wie die Schraubenaufnahme 10 der Fig. 1 bis 3, so dass lediglich die Unterschiede zur Schraubenaufnahme 10 erläutert werden.

Die Schraubenaufnahme 30 weist insgesamt neun Vorsprünge 36 auf, die mit dem Grundkörper der Schraubenaufnahme 30 einstückig verbunden sind und die radial nach innen vorragen, so dass die radial innen liegenden Enden der Vorsprünge radial innerhalb einer durch das Maschinengewinde 14 definierten Maschinengewindeinnenkontur angeordnet sind. Die Vorderansicht der Schraubenaufnahme 30 der Fig. 8 lässt erkennen, dass die Vorsprünge 36 in Umfangsrichtung gesehen um jeweils 120° voneinander beabstandet sind.

Die Ansicht auf den Schnittverlauf A-A in Fig. 8, der in Fig. 9 dargestellt ist, lässt erkennen, dass in Längsrichtung der Schraubenaufnahme 30 gesehen jeweils drei Vorsprünge 36 gleichmäßig beabstandet voneinander in dem Schraubenkanal 12 der Schraubenaufnahme 30 angeordnet sind. Auch bei der Schraubenaufnahme 30 liegt das Ende, von dem eine Schraube eingedreht wird, in der Ansicht der Fig. 9 rechts. Wie zu erkennen ist, stehen beim Eindrehen einer Maschinenschraube, die passend zum Maschinengewinde 14 ausgebildet ist, etwas mehr als zwei vollständige Gewindegänge zur Verfügung, bis das vordere Ende der Schraube auf die erste über den Umfang verteilte Serie von drei Vorsprüngen 36 trifft. Die Schraube ist damit schon ausreichend fest verankert, um beim Eindrehen das Material der Vorsprünge 36 plastisch zu verformen und radial nach außen zu verdrängen.

Wie Fig. 7 und Fig. 8 zu entnehmen ist, sind die Vorsprünge 36 im Querschnitt gesehen trapezförmig ausgebildet, wobei eine radial innen liegende Oberfläche 32 leicht konkav ausgebildet ist. Auch sind alle Vorsprünge 36 mit einer Anlaufschräge 34 versehen, die das Auflaufen einer Schraube beim Eindrehen erleichtert.

Wie der Ansicht der Fig. 9 zu entnehmen ist, sind alle Vorsprünge 36 einstückig mit dem Grundkörper der Schraubenaufnahme 30 ausgebildet. Beispielsweise ist die Schraubenaufnahme 30 einstückig mittels Kunststoffspritzguss hergestellt.

Die Schraubenaufnahme 30 kann beispielsweise auch einen Abschnitt oder eine Innenseite eines Kunststoffdübels mit Spreizvorrichtungen auf der Außenseite bilden.

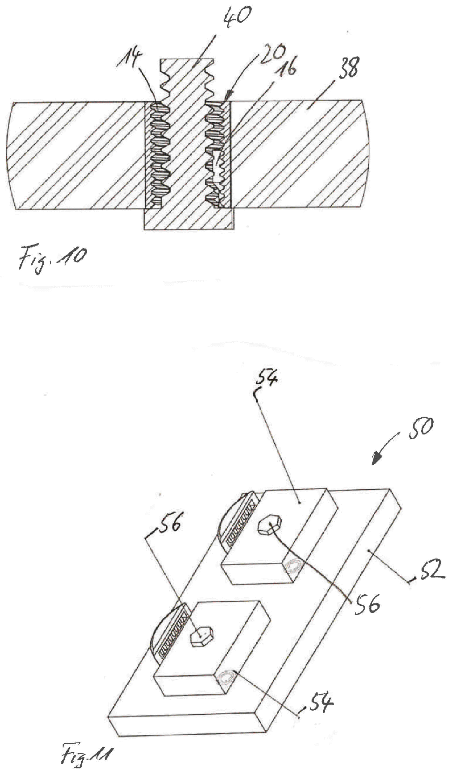

Fig. 10 zeigt eine schematische Schnittansicht einer Schraubenaufnahme 20, die ähnlich zu der Schraubenaufnahme der Fig. 4 bis 6 ausgebildet ist und die in eine Durchgangsbohrung in einer Gipskartonplatte 38 eingesetzt ist, beispielsweise eingeklebt ist. In die Schraubenaufnahme 20 ist eine lediglich schematisch dargestellte Schraube 40 eingeschraubt. Die Schraube 40 ist mit einem Holzgewinde versehen, das ersichtlich eine größere Steigung und einen größeren Unterschied zwischen Kerndurchmesser und Außendurchmesser aufweist als das Maschinengewinde 14 der Schraubenaufnahme 20. Ein Außendurchmesser des Gewindes der Schraube 40 ist deutlich kleiner als der Innendurchmesser des Maschinengewindes 40, aber etwas größer als die lichte Weite, die zwischen den radial innen liegenden Enden der Vorsprünge 16 vorliegt. In der Ansicht der Fig. 10 ist lediglich einer der Vorsprünge 16 dargestellt. Tatsächlich weist die Schraubenaufnahme 20 aber, siehe Fig. 5, vier oder mehr gleichmäßig um den Umfang verteilte Vorsprünge 16 auf, gegebenenfalls auch nur drei im Abstand von jeweils 120° voneinander beabstandete Vorsprünge 16.

Der Außendurchmesser des Gewindes der Schraube 40 ist, wie ausgeführt wurde, etwas größer als die lichte Weite zwischen den Vorsprüngen 16. Beim Einschrauben formt das Gewinde der Schraube 40 infolgedessen ein Gegengewinde in den Vorsprüngen 16 ein. In der Darstellung der Fig. 10 ist zu erkennen, dass die Flanken zweier Gewindegänge in das Material des Vorsprungs 16 eingreifen.

Die Vorsprünge 16 können selbstverständlich radial weiter nach innen vorragen, als dies in Fig. 10 dargestellt ist und die Schraube 40 kann selbstverständlich ein Gewinde aufweisen, das einen größeren Außendurchmesser aufweist, als in Fig. 10 dargestellt ist. Die prinzipielle Funktion der Schraubenaufnahme 20 kann Fig. 10 aber gut entnommen werden. Wenn eine Schraube 40, deren Gewinde einen Außendurchmesser aufweist, der kleiner ist als der Innendurchmesser des Maschinengewindes 14, in die Schraubenaufnahme 20 eingeschraubt wird, dann formt das Gewinde der Schraube 40 ein Gegengewinde in den Vorsprüngen 16 aus und die Schraube 14 kann dadurch sicher in der Schraubenaufnahme 20 verankert werden. Die Schraubenaufnahme 20, allgemein die erfindungsgemäßen Schraubenaufnahmen, können dadurch in äußerst flexibler Weise für Schrauben mit unterschiedlichem Durchmesser und unterschiedlichen Gewinden eingesetzt werden.

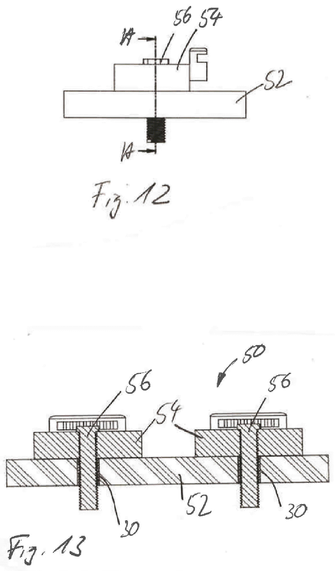

Fig. 11 zeigt eine Ansicht einer Anordnung 50 von schräg oben, wobei die Anordnung 50 eine Gipskartonplatte 52, zwei auf der Gipskartonplatte angeordnete Bauteile 54 und zwei Schrauben 56 aufweist, mit denen die Bauteile 54 an der Gipskartonplatte 52 verankert sind. In der Gipskartonplatte 52 sind, vgl. Fig. 13, zwei erfindungsgemäße Schraubenaufnahmen 30 angeordnet, wie sie bereits anhand der Fig. 7 bis 9 erläutert wurden.

Die Schrauben 56 sind jeweils als Maschinenschrauben und passend zum Maschinengewinde 14 der Schraubenaufnahmen 30 ausgebildet. Beim Eindrehen der Maschinenschrauben 56 in die Schraubenaufnahmen 30 werden, wie erläutert wurde, die Vorsprünge 36 plastisch verformt und radial nach außen verdrängt. Wie Fig. 13 zu entnehmen ist, sind die Maschinenschrauben 56 dadurch zuverlässig in den Schraubenaufnahmen 30 verankert und halten die Bauteile 54 zuverlässig an der Gipskartonplatte 52.

Fig. 12 zeigt eine Seitenansicht der Anordnung 50 der Fig. 11. Fig. 13 zeigt eine Ansicht auf die Schnittebene A-A in Fig. 12.

## Patentansprüche

1. Schraubenaufnahme mit einem Schraubenkanal, dessen Innenwandung wenigstens abschnittsweise mit einem Maschinengewinde versehen ist, um das Eindrehen und Verankern von Maschinenschrauben in dem Schraubenkanal zu ermöglichen, **dadurch gekennzeichnet, dass** die Innenwandung mit wenigstens drei, insbesondere vier, radial nach innen vorragenden und über den Umfang der Innenwandung verteilten Vorsprüngen versehen ist, wobei die radial innenliegenden Enden der Vorsprünge radial innerhalb einer durch das Maschinengewinde definierten Maschinengewindeinnenkontur angeordnet sind.

2. Schraubenaufnahme nach Anspruch 1, **dadurch gekennzeichnet, dass** die Vorsprünge innerhalb von Ausnehmungen im Maschinengewinde angeordnet sind.

3. Schraubenaufnahme nach Anspruch 2, **dadurch gekennzeichnet, dass** in Umfangsrichtung die Ausnehmungen breiter sind als die Vorsprünge und/oder dass in Längsrichtung die Ausnehmungen länger sind als die Vorsprünge.

4. Schraubenaufnahme nach einem der vorstehenden Ansprüche, **dadurch gekennzeichnet, dass** die Vorsprünge in Form einer im Querschnitt dreieckigen Profilleiste ausgebildet sind, wobei eine Dachkante der Profilleiste radial innen liegt und sich die Profilleiste in einer Richtung radial nach außen verbreitert.

5. Schraubenaufnahme nach einem der vorstehenden Ansprüche, **dadurch gekennzeichnet, dass** in Einschraubrichtung vorne und/oder hinten liegende Kanten der Vorsprünge abgeschrägt sind.

6. Schraubenaufnahme nach einem der vorstehenden Ansprüche, **dadurch gekennzeichnet, dass** die Vorsprünge mit einem Abschnitt eines Innengewindes, insbesondere für eine Holzschraube oder Blechschraube, oder mit einer Verzahnung versehen sind.

7. Schraubenaufnahme nach einem der vorstehenden Ansprüche, **dadurch gekennzeichnet, dass** die Vorsprünge zum Einfurchen eines Gewindes, insbesondere beim Eindrehen einer Holzschraube oder Blechschraube in den Schraubenkanal, ausgebildet sind.

8. Schraubenaufnahme nach einem der vorstehenden Ansprüche, **dadurch gekennzeichnet, dass** die Vorsprünge aus plastisch verformbaren Material, insbesondere Kunststoff, gebildet sind.

9. Schraubenaufnahme nach einem der vorstehenden Ansprüche, **dadurch gekennzeichnet, dass** das Maschinengewinde durch mindestens drei gleichmäßig um den Umfang des Maschinengewindes verteilten, insbesondere in Längsrichtung durchlaufenden, Nuten unterbrochen ist, wobei die Vorsprünge im Bereich der Nuten angeordnet sind.

10. Schraubenaufnahme nach einem der vorstehenden Ansprüche, **dadurch gekennzeichnet, dass** die Vorsprünge aus Vollmaterial bestehen und mit ihrer jeweiligen Basis mit einem Grundkörper der Schraubenaufnahme verbunden sind.

11. Schraubenaufnahme nach einem der vorstehenden Ansprüche, **dadurch gekennzeichnet, dass** die Vorsprünge federbelastet und radial nach innen vorgespannt sind.

12. Schraubenaufnahme nach einem der vorstehenden Ansprüche, **dadurch gekennzeichnet, dass** in Einschraubrichtung des Maschinengewindes gesehen mehrere radial nach innen vorragende Vorsprünge hintereinander angeordnet sind.

13. Schraubenaufnahme nach Anspruch 12, **dadurch gekennzeichnet, dass** ein Abstand zwischen in Einschraubrichtung aufeinanderfolgenden Vorsprüngen das 0,25 bis 0,75-fche, insbesondere das 0,4-fache bis 0,6-fache, insbesondere das 0,5-fache, des Nenndurchmessers des Maschinengewindes beträgt.

14. Kunststoffdübel mit einer Schraubenaufnahme nach wenigstens einem der vorstehenden Ansprüche.

15. Kunststoffdübel nach Anspruch 14, wobei eine Außenseite des Kunststoffdübels mit Spreizelementen versehen ist.
